# EUROPÄISCHE PATENTSCHRIFT

(11) **EP 0 881 735 B1**
(45) Veröffentlichungstag und Bekanntmachung des Hinweises auf die Patenterteilung: **21.01.2009**
(21) Anmeldenummer: 98109130.9
(22) Anmeldetag: 18.05.1998
(51) Int. Cl.: H02J 1/10, G06F 1/30, H02M 7/17

(54) **Schaltungsanordnung einer Stromversorgungseinheit**
Circuit arrangement for a power supply unit
Disposition de circuit pour une unité d'alimentation de puissance

(30) Priorität: 27.05.1997 DE 19722125
(43) Veröffentlichungstag der Anmeldung: 02.12.1998
(73) Patentinhaber: Fujitsu Siemens Computers GmbH, 80807 München (DE)
(72) Erfinder: Busch, Peter, 86179 Augsburg (DE)
(74) Vertreter: Epping - Hermann - Fischer

(56) Entgegenhaltungen:
- EP-A- 0 432 754
- EP-A- 0 547 418
- EP-A- 0 599 410
- US-A- 5 550 461

## Beschreibung

Die Erfindung betrifft eine Schaltungsanordnung einer Stromversorgungseinheit gemäß dem Oberbegriff des Anspruchs 1.

Computeranlagen oder Personalcomputer mit hoher Datenverarbeitungsleistung erfordern mehr,und mehr Stromversorgungssysteme mit hohen Leistungen. Zur Anwendung kommen Stromversorgungssysteme, die mit Stromversorgungseinheiten aufgebaut , sind, die parallel zusammenschaltbar sind, um so einerseits nur einen Typ von Stromversorgungseinheit zu haben, andererseits aber trotzdem jeweils gemäß den Anforderungen den Strombedarf decken zu können. Es reicht aber nicht mehr aus, nur den Strombedarf zu decken. Es muss auch sichergestellt werden, dass eine gleichmäßige Aufteilung der Stromanteile, die die Stromversorgungseinheiten jeweils zu einem Gesamtstrom liefern, gegeben ist. Dadurch wird eine gleichmäßige Belastung und damit eine möglichst lange Lebensdauer der Stromversorgungseinheiten erzielt. Weiter-wird aber auch eine Redundanz in dem Stromversorgungssystem verlangt, so dass, wenn doch einmal eine Stromversorgungseinheit ausfällt, das Stromversorgungssystem weiterhin ohne Ausfall oder Einbruch der Systemspannungen die Computeranlage oder den Personalcomputer betreibt.

Aus EP 0 432 754 B1 ist eine Schaltungsanordnung einer Stromversorgungseinheit bekannt, die den obigen Kriterien entspricht. Sie ist parallel zu einem redundanten Stromversorgungssystem zusammenschaltbar mit einer auf die jeweiligen Strömversorgungseinheiten gleichmäßigen Aufteilung der Ausgangsstromanteile. In dieser Stromversorgungseinheit stellt eine als Regelstrecke bezeichnete Komponente ein Leistungsteil dar, das auf einer Ausgangsleitung eine Ausgangsspannung liefert, die zusammen mit den Ausgangsspannungen der jeweils anderen an einem Stromversorgungssystem beteiligten Stromversorgungseinheiten auf einer gemeinsamen Ausgangsspannungsleitung eine gemeinsame Ausgangsspannung liefern. Für die richtige Regelung der Ausgangsspannung steht die Regelstrecke mit ersten Mitteln gebildet aus einem Spannungsregler in verbindung, mit dem eine Spannungsabweichung zwischen der Ausgangsspannung und einer Sollausgangsspannung in Form einer Referenzspannung erfasst wird. Ein Mittelwertbildner in Form eines Widerstandes erzeugt als ein zweites Mittel aus der vom Spannungsregler erfassten Spannungsabweichung eine ein Maß für einen gemittelten Sollstrom darstellende-elektrische Führungsgröße auf einer für alle an einem Stromversorgungssystem beteiligten Stromversorgungseinheiten gemeinsamen Parallelsteuerbusleitung. Schließlich dienen dritte Mittel in Form eines Stromreglers dazu, einen auf der Ausgangsleitung fließenden Iststrom auf den durch die zweiten Mittel in Form der elektrischen Führungsgröße dargestellten Sollstrom einzustellen. Dazu steuert der Stromregler direkt die Regelstrecke in einer entsprechenden Weise, beispielsweise durch eine Tastverhältnissteuerung von in dem Leistungsteil enthaltenen Schalttransistoren.

Nachteilig bei dieser Stromversorgungseinheit ist, dass eine kleine Überspannung auf der gemeinsamen Ausgangsspannungsleitung infolge eines defekten Stromreglers oder eines defekten Leistungsteils innerhalb einer der an einem Stromversorgungssystem beteiligten Stromversorgungseinheiten die Spannungsregler der Stromversorgungseinheiten, in denen kein Defekt aufgetreten ist, die.gemeinsame Parallelsteuerbusleitung auf Null Volt regeln. Dadurch werden die jeweiligen Stromregler in den jeweils nicht defekten Stromversorgungseinheiten die Ausgangsspannungen der jeweils zugehörigen Leistungsteile ebenfalls auf Null Volt regeln. Es besteht dann die Gefahr, dass die nicht defekten Stromversorgungseinheiten, weil davon auszugehen ist, dass die Stromversorgungseinheiten mit einer Unterspannungsabschalteinrichtung ausgestattet sind, abschalten. Wird infolge eines oben angesprochenen Defekts eine größere Überspannung an der gemeinsamen Ausgangsspannungsleitung erzeugt, besteht die Gefahr, dass nach einiger Zeit die defekte Stromversorgungseinheit abschaltet, weil davon auszugehen ist, dass die Stromversorgungseinheiten auch eine interne Fehlererkennungsschaltung haben, die dann einsetzt. Die gemeinsame Ausgangsspannung auf der gemeinsamen Ausgangsspannungsleitung ist in der Regel über einen Gesamtausgangsspannungskondensator gepuffert und sinkt deshalb nicht schlagartig auf Null Volt ab. Sinkt die gemeinsame Ausgangsspannung auf der gemeinsamen Ausgangsspannungsleitung infolge der Fehlerabschaltung unter eine Nennspannung ab, die dem Stromversorgungssystem an sich zugrunde liegt, wird die Spannung auf der gemeinsamen Parallelsteuerbusleitung von Null Volt wieder auf einen entsprechenden Spannungswert angehoben. Die nicht defekten Stromversorgungseinheiten beginnen wieder zu arbeiten und müssen nun ihre Ausgangsspannungen von Null Volt auf die Nennspannung anheben. Dies dauert relativ lange, so dass die gemeinsame Ausgangsspannung auf der gemeinsamen Ausgangsspannungsleitung kurzzeitig zu viel unter den Nennwert sinkt.

Aus den Druckschriften US 5,550,461 und EP 0 599 410 A1 ist ein Stromversorgungssystem mit mehreren, mittels Entkopplungsdioden parallel geschalteten Stromversorgungseinheiten bekannt, bei dem innerhalb der einzelnen Stromverorgungseinheiten mittels eines Differenzverstärkers festgestellt wird ob die jeweilige Entkopplungsdiode leitend ist oder blockiert. Bei leitender Diode wird eine geregelte Ausgangsspannung am Ausgang der Diode beeitgestellt, wohingegen bei blockierter Entkopplungsdiode auf die am Eingang der Diode anliegende Spanung geregelt wird. Auf diese Weise wird erreicht, dass keine der Stromversorgungseinheiten in ihrer Spannung zu weit abfällt. Nachteilig an diesen Stromversorgungssystemen ist jedoch, dass eine gleichmäßige Aufteilung der Stromanteile, die die einzelnen Stromversorgungseinheiten zum Gesamtstrom liefern, entweder nicht gegeben ist oder sich nur aufwändig realisieren läßt.

Die Druckschrift EP 0 547 418 A2 bescheibt ein Stromversorgungssystem mit mehreren, mittels Entkopplungsdioden parallel geschalteten Stromversorgungseinheiten. Hierbei ist vorgesehen, dass die Spannung am Eingang der jeweiligen Entkopplungsdioden geregelt wird. Auch dadurch wird ein zu weites Absinken der Spannung einer Stromversorgungseinheit erreicht. Nachteilig ist wiederum, dass eine gleichmäßige Aufteilung der Stromanteile der einzelnen Stromversorgungseinheiten nicht gegeben ist. Zudem kann wegen des Spannungsabfalls an der Entkopplungsdiode die Ausgangsspannung nicht auf einen genau definierten Wert geregelt werden.

Aufgabe der vorliegenden Erfindung ist daher, eine Stromversorgungseinheit der eingangs genannten Art, bei der eine gleichmäßige Aufteilung der Stromanteile, die die einzelnen Stromversorgungseinheiten zum Gesamtstrom liefern, gegeben ist, anzugeben, mit der Stromversorgungssysteme der oben genannten Art aufgebaut werden können mit der technischen Eigenschaft, dass bei Problemen der vorhin beschriebenen Art im gegebenen Fall wesentlich schneller wieder ihre Nennausgangsspannungen einregeln.

Diese Aufgabe wird gelöst durch die kennzeichnenden Merkmale des Anspruchs 1. Danach wird mit Hilfe eines entsprechenden Spannungsteilers am Ausgang der Stromversorgungseinheit mit entsprechender Zusatzbeschaltung erreicht, dass in einem Überspannungsfall der früher beschriebenen Art die nicht defekten Stromversorgungseinheiten eines betreffenden Stromversorgungssystems mit einer jeweiligen Ausgangsspannung betrieben wird, die sich im Leerlauf befindet und nur wenig unterhalb der eigentlichen Nennspannung des Stromversorgungssystems liegt.

Vorteilhafte Ausgestaltungen der Erfindung sind Gegenstand von Unteransprüchen.

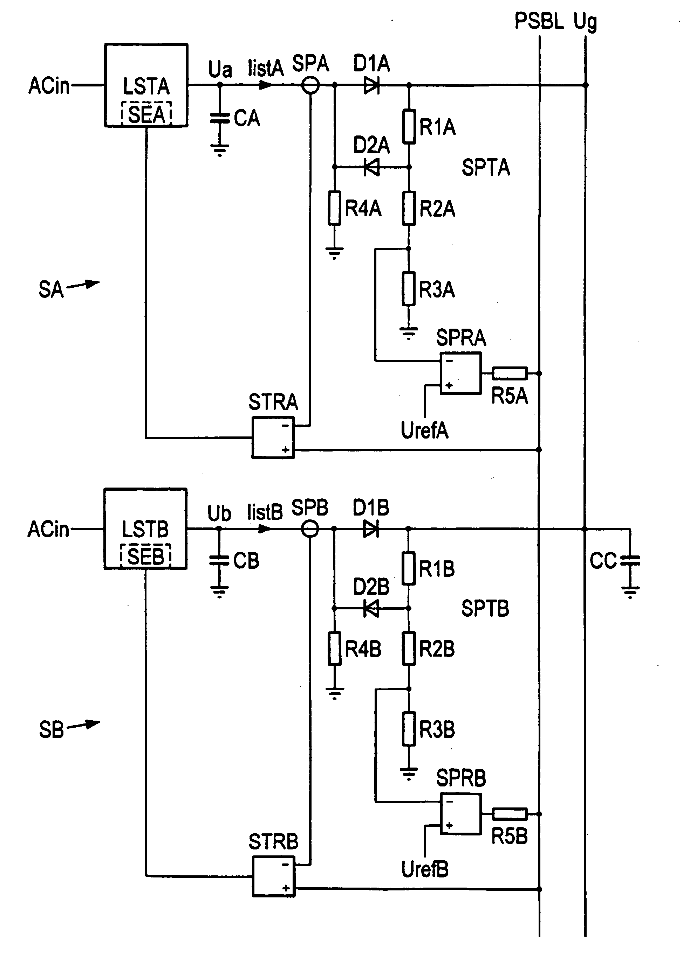

Nachfolgend wird ein Ausführungsbeispiel der Erfindung anhand einer Zeichnung mit einer einzigen Figur erläutert.

In der Figur ist ein Stromversorgungssystem mit zwei parallelgeschalteten, identischen Stromversorgungseinheiten SA und SB zu sehen. Die Anzahl der parallel geschalteten Stromversorgungseinheiten ist für die Beschreibung der Erfindung unerheblich, da sich die Erfindung auf die Stromversorgungseinheit an sich bezieht und die Zahl Zwei nur stellvertretend für eine mögliche größere Anzahl steht. Weiter beschränkt sich die nachfolgende Beschreibung auf die Beschreibung der in der Figur an erster Stelle gezeichneten Stromversorgungseinneit SA, da die weiteren Stromversorgungseinheiten, wie gesagt, identisch sind. Soweit also Bezugszeichen mit dem Endbuchstaben A angegeben werden, gelten diese auch für die anderen Stromversorgungseinheiten mit der Maßgabe, dass der Endbuchstabe durch einen entsprechenden weiteren fortlaufenden Buchstaben ersetzt ist. Für die in der Figur zum Beispiel an zweiter Stelle angegebenen Stromversorgungseinheit ist das beispielsweise der Buchstabe B.

Die in der Figur an erster Stelle angegebene Stromversorgungseinheit SA weist ein Leistungsteil LSTA auf, das mit einer Eingangswechselspannung ACin versorgt wird. Das Leistungsteil LSTA ist an einem Ausgang mit einer Ausgangsleitung verbunden, auf der von dem Leistungsteil LSTA eine Ausgangsspannung Ua (LSTB: Ub) erzeugt ist. Die Ausgangsleitungen sind am Ausgang des Stromversorgungssystems über eine gemeinsame Ausgangsspannungsleitung miteinander verbunden. Auf der gemeinsamen Ausgangsspannungsleitung stellt sich eine gemeinsame Ausgangsspannung Ug ein. Je nach vorherrschender Strombelastung auf der gemeinsamen Ausgangsspannungsleitung fließt auf der Ausgangsleitung der Stromversorgungseinheit SA ein Stromanteil, der als ein Iststrom IistA aufzufassen ist.

Alle die Istströme der in einem Stromversorgungssystem vorhandenen Stromversorgungseinheiten liefern einen Stromanteil zum gesamten Laststrom auf der gemeinsamen Ausgangsspannungsleitung. Solange dieser Laststrom erzeugt werden kann, ist ein von dem Stromversorgungssystem zu betreibendes Gerät funktionstüchtig.

In der Ausgangsleitung der Stromversorgungseinheit SA ist eine Entkopplungsdiode D1A vorgesehen, die die Funktion hat, dass die Stromversorgungseinheit SA im laufenden Betrieb des Stromversorgungssystems dazugeschaltet oder abgekoppelt werden kann.

Das Leistungsteil LSTA weist einen Steuereingang SEA auf, über den zu Steuerungszwecken eine elektrische Führungsgröße zugeführt wird. Abhängig von der elektrischen Führungsgröße regelt das Leistungsteil LSTA auf der Ausgangsleitung den Iststrom IistA ein.

Im Detail erfolgt die Einregelung des Iststromes IistA dadurch, dass über einen Spannungsteiler SPTA die gemeinsame Ausgangsspannung Ug auf der gemeinsamen Ausgangsspannungsleitung abgegriffen und durch einen Spannungsregler SPRA mit einer Sollspannung, die durch eine Referenzspannung UrefA zur Verfügung gestellt wird, verglichen wird. Die gemeinsame Ausgangsspannung Ug ist dabei dem Spannungsregler SPRA am Minuseingang und die Referenzspannung UrefA am Pluseingang zugeführt. Als Ergebnis des Vergleichs wird eine Spannung erzeugt, die über einen Widerstand R5A auf eine gemeinsame Parallelsteuerbusleitung PSBL geführt wird. Es handelt sich deshalb um eine gemeinsame Parallelsteuerbusleitung, weil diese Leitung alle entsprechenden Punkte der anderen am Stromversorgungssystem beteiligten Stromversorgungseinheiten miteinander verbindet und parallel schaltet. Der Widerstand R5A stellt für die Stromversorgungseinheit SA einen Mittelwertbildner dar, weil sich durch diesen Widerstand in Verbindung mit den jeweils entsprechenden Widerständen der anderen am Stromversorgungssystem beteiligten Stromversorgungseinheiten auf der gemeinsamen Parallelsteuerbusleitung PSBL eine Spannung als eine elektrische Führungsgröße einstellt, die ein Maß für einen gemittelten Sollstrom darstellt. Anhand des gemittelten Sollstromes stellen alle Stromversorgungseinheiten ihre Stromanteile an den zugehörigen Ausgangsleitungen ein, so dass letztlich alle Stromversorgungseinheiten bis auf bauteiltechnisch bedingte Toleranzunterschiede den gleichen Stromanteil liefern.

Ein Stromregler STRA greift über seinen Pluseingang diesen gemittelten Sollstrom ab und vergleicht diesen mit dem Iststrom IistA des Leistungsteils LSTA. Dazu ist der Stromregler STRA über einen Strommesspunkt SPA mit der Ausgangsleitung des Leistungsteils LSTA verbunden. In Abhängigkeit von dem Vergleich erzeugt dann der Stromregler STRA die elektrische Führungsgröße, die das Leistungsteil LSTA dahingehend steuern, dass auf der Ausgangsleitung ein Iststrom IistA fließt, der dem gemittelten Sollstrom auf der gemeinsamen Parallelsteuerbusleitung PSBL entspricht.

Wird infolge eines Defekts beispielsweise des Leistungsteils LSTA oder des Stromreglers STRA der Stromversorgungseinheit SA eine überhöhte gemeinsame Ausgangsspannung Ug erzeugt, treten die eingangs genannten Effekte auf. Um diese zu verhindern, weist der nach der Entkopplungsdiode D1A gegen Masse an die Ausgangsleitung angeschlossene Spannungsteiler SPTA beispielsweise eine Dreiteilung mit den Teilwiderständen R1A, R2A, R3A auf, wobei zwischen dem zweiten und dritten Teilwiderstand R2A und R3A der Minuseingang des Spannungsreglers SPRA und zwischen dem ersten und zweiten Teilwiderstand R1A und R2A eine Ableitdiode D2A angeschlossen ist. Die Ableitdiode D2A ist dabei in der Weise angeschlossen, dass sie im Vergleich zur Entkopplungsdiode D1A antiparallel zur Entkopplungsdiode D1A, das heißt in Gegenrichtung zur Ausgangsspannung Ua der Stromversorgungseinheit SA, geschaltet ist. Auf diese Weise ist die Ableitdiode D2A mit ihrer Kathodenseite vor der Entkopplungsdiode D1A mit der Ausgangsleitung der Stromversorgungseinheit SA verbunden. Gleichzeitig ist die Kathodenseite der Ableitdiode D2A über einen Ableitwiderstand R4A mit Masse der Stromversorgungseinheit SA verbunden.

Nachfolgend wird die Funktionsweise der Ableitdiode D2A und der zugehörigen Beschaltung näher erläutert.

Steigt die gemeinsame Ausgangsspannung Ug der Stromversorgungseinheiten SA und SB wegen einer defekten Stromversorgung SA an, fällt zunächst die innere Ausgangsspannung Ub der Stromversorgungseinheit SB ab, bis D2B zu leiten beginnt. Ist der Teiler allgemein der Teilwiderstände R1, R2 und R3 und damit im speziellen der der Teilwiderstände R1B, R2B und R3B z.B. auf R3B=45%, R2B=45% und R1B=10% dimensioniert, so beginnt die Ableitdiode D2B der Stromversorgungseinheit SB ab einer Ausgangsspannung Ub von kleiner als (0,9*Ugnenn-UD2B) zu leiten. Ugnenn ist die Nennspannung der gemeinsamen Ausgangsspannung Ug, und UD2B ist der Spannungsabfall über der Ableitdiode D2B im leitenden Zustand.

Wenn die Ableitdiode D2B leitet, wird die Eingangsspannung von Spannungsregler SPRB von der Ausgangsspannung Ub des Lei-stungsteils LSTB bestimmt. Daher fällt die innere Ausgangsspannung Ub nicht mehr weiter ab, die Stromversorgungseinheit SB bleibt im Regelbereich und kann wesentlich schneller wieder auf die Nennausgangsspannung hochregeln, wenn die defekte Stromversorgungseinheit SA abgeschaltet hat. Es besteht auch nicht mehr die Gefahr des Abschaltens der Stromversorgungseinheit SB wegen einer eingebauten Unterspannungsüberwachung, solange die Unterspannungsgrenze unterhalb der Ausgangsspannung Ub = (0,9*Ugnenn-UD2B) liegt.

Solange der Überspannungsfall nicht eintritt, sperren die Ableitdioden D2A bzw. D2B und der Spannungsteiler R1, R2, R3 erfasst die gemeinsame Ausgangsspannung Ug.

Der Teilwiderstand R1A bzw. R1B muss einerseits so dimensioniert sein, dass bei Kurzschluss in der Stromversorgungseinheit (z.B. Ausgangsspannungskondensator CA der Stromversorgungseinheit SA kurzgeschlossen) nur ein geringer Strom durch den Ableitwiderstand D2A bzw. D2B zurück in die Stromversorgungseinheit fließt, andererseits soll er nur einen geringen Anteil des Gesamtwiderstandes der den Spannungsteiler SPTA bzw. SPTB bildenden Teilerkette darstellen (z.B. 5% oder 10%).

Der Ableitwiderstand R4 (R4A bzw. R4B) soll sicherstellen, dass der Strom durch den Teilwiderstand R1 (R1A bzw. R1B) und die Ableitdiode D2 (D2A bzw. D2B) und der Leckstrom durch die Entkopplungsdiode D1 (D1A bzw. D1B) gegen Masse abfließt, damit nicht die Ausgangsspannung Ua bzw. Ub um mehr als die sogenannte Leerlaufspannung im externen Überspannungsfall angehoben werden kann. Oft ist dieser Widerstand aber schon als Grundlastwiderstand in der Stromversorgungseinheit vorhanden.

## Patentansprüche

1. Schaltungsanordnung einer Stromversorgungseinheit (z.B. 5A), parallel zusammenschaltbar mit gleichartigen Stromversorgungseinheiten (z.B. 5B) zu einem redundanten Stromversorgungssystem mit auf die jeweiligen Stromversorgungseinheiten gleichmäßig aufgeteilten Ausgangsstromanteilen (z.B. IᵢₛₜA, IᵢₛₜB) mit wenigstens einer, eine Entkopplungsdiode (z.B. D1A, D1B) zum gegenseitiges Entkoppeln jeweiliger parallelgeschalteter Stromversorgungseinheiten aüfweisenden Ausgangsleitung für eine mit einem Leistungsteil (z.B. LSTA, LSTB) erzeugte Ausgangsspannung, zu deren Regelung erste Mittel zum Erfassen einer Spannungsabweichung gegenüber einer Sollausgangs-spannung (z.B. UrefA, UrefB) zweite Mittel zum Erzeugen einer von der erfassten Spannungsabweichung beeinflussten, ein Maß für einen gemittelten Sollstrom darstellenden elektrischen Führungsgröße auf einer für die an einem Stromversorgungssystem beteiligten Stromversorgungseinheiten gemeinsamen Parallelsteuerbusleitung (PSBL) und dritte Mittel (z.B STRA, STRB) zum Einregeln eines auf der Ausgangsleitung fließenden Iststromes auf den gemittelten Sollstrom durch Steuern des Leistungsteils (z.B LSTA, LSTB) vorgesehen sind,
**dadurch, gekennzeichnet, dass**
am Ausgang der Entkopplungsdiode (z.B. D1A D1B), bezogen auf Masse als Bezugspotential der Schaltungsanordnung, ein mit einem Teilabgriff mit den ersten Mitteln verbundener Spannungsteiler (z.B. SPTA-SPTB) vorgesehen ist, der einen weiteren Teilabgriff für eine antiparallel zur Entkopplungsdiode (z.B. D1A, D1B) geschaltete Ableitdiode (z.B. D2A D2B) aufweist, deren Ausgang mit dem Ausgang einer Stromversorgungseinheit verbunden ist und deren Ausgang zudem über einen Ableitwiderstand (z.B. R4A, R4B) mit dem Bezugspotential der Schaltungsanordnung verbunden ist.

2. Schaltungsanordnung nach Anspruch 1, **dadurch gekennzeichnet, dass** zu den ersten Mitteln ein Spannungsregler (z.B. SPRA) mit einem Minus- und einem Pluseingang gehört, dessen Minuseingang mit dem Spannungsteiler (z.B. SPTA) verbunden und dessen Pluseingang mit einer Referenzspannung (z.B. UrefA) als Maß für die Sollausgangsspannung (Ua) beaufschlagt ist, dass zu den zweiten Mitteln ein Widerstand (z.B. RA) gehört, der zwischen einem Ausgang des Spannungsreglers (z.B. SPRA) und der Parallelsteuerbusleitung (PSBL) angeordnet ist, dass zu den dritten Mitteln ein Stromregler (z.B. STRA) gehört, der mit einem Minuseingang zum Überwachen des Iststromes (z.B. IistA) mit der Ausgangsleitung des Leistungsteils (z.B. LSTA) und mit einem Pluseingang mit der Parallelsteuerbusleitung (PSBL) verbunden ist.

3. Schaltungsanordnung nach Anspruch 2, **dadurch gekennzeichnet, dass** der Spannungsteiler (z.B. SPTA) gegen Masse geschaltet ist und drei Teilwiderstände (z.B. R1A, R2A, R3A) aufweist, die mit dem Spannungsteiler (z.B. SPTA) und der Ableitdiode (z.B. D2A) in der Weise zusammengeschaltet sind, dass zwischen dem ersten und zweiten Teilwiderstand (z.B. R1A und R2A) die Ableitdiode (z.B. D2A) und zwischen dem zweiten und dritten Teilwiderstand (z.B. R2A und R3A) der Minuseingang des Spannungsreglers (z.B. SPRA) angeschlossen sind.

4. Schaltungsanordnung nach Anspruch 3, **dadurch gekennzeichnet, dass** die Teilwiderstände (z.B. R1A, R2A, R3A) Widerstandswerte aufweisen, die größenordnungsmäßig dem Verhältnis 10:45:45 entsprechen.

## Claims

1. Circuit arrangement for a power supply unit (e.g. SA), which can be connected in parallel with identical power supply units (e.g. SB) to form a redundant power supply system having output current components (e.g. IistA, IistB) which are equally divided between the respective power supply units, having at least one output line for an output voltage which is produced using a power section (e.g. LSTA, LSTB), said output line having a decoupling diode (e.g. D1A, D1B) for mutually decoupling respective power supply units connected in parallel, first means for detecting a voltage deviation from a desired output voltage (e.g. UrefA, UrefB), second means for producing an electrical reference variable, which is influenced by the voltage deviation detected and represents a measure of an average desired current, on a parallel control bus line (PSBL) which is common to the power supply units involved in a power supply system, and third means (e.g. STRA, STRB) for regulating an actual current flowing on the output line to the average desired current by controlling the power section (e.g. LSTA, LTSB) being provided for the purpose of regulating said output voltage,
**characterized in that**
a voltage divider (e.g. SPTB) is provided at the output of the decoupling diode (e.g. D1A, D1B), based on earth as the reference potential of the circuit arrangement, a tap element of said voltage divider being connected to the first means, and said voltage divider having a further tap element for a discharge diode (e.g. D2A, D2B) which is reverse-connected in parallel with the decoupling diode (e.g. D1A, D1B), the output of said discharge diode being connected to the output of a power supply unit and the output of said discharge diode also being connected to the reference potential of the circuit arrangement via a discharge resistor (e.g. R4B).

2. Circuit arrangement according to Claim 1, **characterized in that** the first means include a voltage regulator (e.g. SPRA) having a negative input and a positive input, the negative input of said regulator being connected to the voltage divider (e.g. SPTA), and a reference voltage (e.g. UrefA) being applied to the positive input of said regulator as a measure of the desired output voltage (Ua), **in that** the second means include a resistor (e.g. RA) which is arranged between an output of the voltage regulator (e.g. SPRA) and the parallel control bus line (PSBL), and **in that** the third means include a current regulator (e.g. STRA), a negative input of which is connected to the output line of the power section (e.g. LSTA) in order to monitor the actual current (e.g. IistA), and a positive input of which is connected to the parallel control bus line (PSBL).

3. Circuit arrangement according to Claim 2, **characterized in that** the voltage divider (e.g. SPTA) is connected to earth and has three resistance elements (e.g. R1A, R2A, R3A) which are connected to the voltage divider (e.g. SPTA) and to the discharge diode (e.g. D2A) in such a manner that the discharge diode (e.g. D2A) is connected between the first and second resistance elements (e.g. R1A and R2A) and the negative input of the voltage regulator (e.g. SPRA) is connected between the second and third resistance elements (e.g. R2A and R3A).

4. Circuit arrangement according to Claim 3, **characterized in that** the resistance elements (e.g. R1A, R2A, R3A) have resistances whose orders of magnitude correspond to the ratio 10:45:45.

## Revendications

1. Arrangement de circuit d'une unité d'alimentation électrique (par ex. SA), pouvant être interconnectée en parallèle avec des unités d'alimentation électrique (par ex. SB) similaires pour former un système d'alimentation électrique redondant avec des parts de courant de sortie (par ex. I_{istA}, I_{istB}) distribuées régulièrement sur les différentes unités d'alimentation électrique, comprenant au moins une ligne de sortie, présentant une diode de découplage (par ex. D1A, D1B) destinée au découplage réciproque des unités d'alimentation électrique respectivement branchées en parallèle, pour une tension de sortie produite avec une partie de puissance (par ex. LSTA, LSTB) pour la régulation de laquelle sont prévus des premiers moyens de détection d'une différence de tension par rapport à une tension de sortie de consigne (par ex. U_{refA}, U_{refB}), des deuxièmes moyens pour générer sur une ligne de bus de commande parallèle (PSBL) commune aux unités d'alimentation électrique participant au système d'alimentation électrique une grandeur de référence électrique influencée par la différence de tension détectée et qui représente une indication pour la moyenne calculée d'un courant de consigne, ainsi que des troisièmes moyens (par ex. STRA, STRB) pour asservir un courant réel qui circule dans la ligne de sortie à la moyenne calculée du courant de consigne en commandant la partie de puissance (par ex. LSTA, LSTB), **caractérisé en ce qu'**à la sortie de la diode de découplage (par ex. D1A, D1B), par rapport à la masse faisant office de potentiel de référence de l'arrangement de circuit, est prévu un diviseur de tension (par ex. SPTB) relié avec les premiers moyens par une prise partielle, lequel présente une autre prise partielle pour une diode de dérivation (par ex. D2A, D2B) branchée en antiparallèle avec la diode de découplage (par ex. D1A, D1B), dont la sortie est reliée avec la sortie d'une unité d'alimentation électrique et dont la sortie est en plus reliée avec le potentiel de référence de l'arrangement de circuit par le biais d'une résistance de dérivation (par ex. R4B).

2. Arrangement de circuit selon la revendication 1, **caractérisé en ce que** les premiers moyens comprennent un régulateur de tension (par ex. SPRA) muni d'une entrée négative et d'une entrée positive, dont l'entrée négative est reliée avec le diviseur de tension (par ex. SPTA) et dont l'entrée positive est exposée à une tension de référence (par ex. UrefA) faisant office d'indication pour la tension de sortie de consigne (Ua), que les deuxièmes moyens comprennent une résistance (par ex. RA) qui est disposée entre une sortie du régulateur de tension (par ex. SPRA) et la ligne de bus de commande parallèle (PSBL), que les troisièmes moyens comprennent un régulateur de courant (par ex. STRA) qui est relié par une entrée négative avec la ligne de sortie de la partie de puissance (par ex. LSTA) en vue de surveiller le courant réel (par ex. IistA) et avec la ligne de bus de commande parallèle (PSBL) par une entrée positive.

3. Arrangement de circuit selon la revendication 2, **caractérisé en ce que** le diviseur de tension (par ex. SPTA) est commuté par rapport à la masse et présente trois résistances partielles (par ex. R1A, R2A, R3A) qui sont interconnectées avec le diviseur de tension (par ex. SPTA) et la diode de dérivation (par ex. D2A) de telle sorte que la diode de dérivation (par ex. D2A) est raccordée entre la première et la deuxième résistances partielles (par ex. R1A et R2A) et l'entrée négative du régulateur de tension (par ex. SPRA) est raccordée entre la deuxième et la troisième résistances partielles (par ex. R2A et R3A).

4. Arrangement de circuit selon la revendication 3, **caractérisé en ce que** les résistances partielles (par ex. R1A, R2A, R3A) présentent des valeurs de résistance dont l'ordre de grandeur correspond au rapport 10:45:45.
